# EUROPÄISCHE PATENTSCHRIFT

(11) **EP 3 819 620 B1**
(45) Veröffentlichungstag und Bekanntmachung des Hinweises auf die Patenterteilung: **08.03.2023**
(21) Anmeldenummer: 20201229.0
(22) Anmeldetag: 12.10.2020
(51) Int. Cl.: G01M 17/02, B60B 30/04, B29D 30/00

(54) **GREIFSYSTEM ZUM BELADEN UND ENTLADEN EINES FAHRZEUGREIFENS**
GRIPPING SYSTEM FOR LOADING AND UNLOADING A VEHICLE TYRE
SYSTÈME DE PRÉHENSION POUR LE CHARGEMENT ET DÉCHARGEMENT D'UN PNEU DE VÉHICULE

(30) Priorität: 07.11.2019 DE 102019217167
(43) Veröffentlichungstag der Anmeldung: 12.05.2021
(73) Patentinhaber: Continental Reifen Deutschland GmbH, 30165 Hannover (DE)
(72) Erfinder: FRERICHS, Gesa, 30419 Hannover (DE); SOVICKA, Ivan, 30419 Hannover (DE); SMETANKA, Jindrich, 30419 Hannover (DE); BERGER, Markus, verstorben (DE)
(74) Vertreter: Continental Corporation

(56) Entgegenhaltungen:
- EP-A1- 3 255 405

## Beschreibung

Die Erfindung betrifft ein Greifsystem zum Beladen und Entladen eines Fahrzeugreifens, insbesondere in eine oder aus einer Reifenaufnahme einer Messeinrichtung zum Vermessen eines Fahrzeugreifens.

Zum Vermessen eines hergestellten Fahrzeugreifens kann dieser einer Messeinrichtung zugeführt werden, wobei der Fahrzeugreifen dazu in der Messeinrichtung in einer aufrechten Position sowie zentriert zuzuführen ist. Der Fahrzeugreifen wird dazu herkömmlicherweise über ein Förderband in ein Zuführbereich eines Greifsystems transportiert und anschließend über Greifeinheiten des Greifsystems aufgenommen. Der Fahrzeugreifen wird der Greifeinheit dabei vorzentriert übergeben und in der Greifeinheit zwischen zwei Platten eingeklemmt, um die axiale und vorzentrierte Position des Fahrzeugreifens zu sichern. In dieser gesicherten Position wird der Fahrzeugreifen durch die Greifeinheit an eine Reifenaufnahme der Messeinrichtung übergeben. Eine weitere Greifeinheit entnimmt den Fahrzeugreifen nach der Messung aus der Messeinrichtung und übergibt diesen in einem Abführbereich auf ein weiteres Förderband.

Die Zentrierung bzw. Vorzentrierung des Fahrzeugreifens erfolgt herkömmlicherweise über einen zusätzlich vorgelagerten Zentrierprozess, der vor der Übergabe auf die Greifeinheit erfolgt. Die Greifeinheit sorgt somit lediglich dafür, dass die zentrierte Position gehalten wird. Nachteilig hierbei ist, dass das zentrierte Beladen des Fahrzeugreifens auf die Reifenaufnahme der Messeinrichtung sehr aufwendig ist, da eine zusätzlich vorgelagerte Zentrierung nötig ist. Dadurch erhöht sich die Zeit des gesamten Messprozess sowie auch der Bauraum und die Anzahl der verwendeten Komponenten im Messsystem. Zudem kann es insbesondere bei der Übergabe des vorzentrierten Fahrzeugreifens auf das Greifsystem bzw. die Greifeinheit zu einer Verschiebung des Fahrzeugreifens aus seiner vorzentrierten Lage kommen. Weiterhin ist die Zykluszeit eines derartigen Greifsystems erhöht, da die Prozessschritte aufeinanderfolgen. Zudem sind die durch die Greifeinheiten greifbaren Fahrzeugreifen auf gewisse Größen beschränkt.

In EP 3 255 405 A1 ist eine weitere Greifeinheit mit beweglichen Greifarmen beschrieben. Diese Greifeinheit ist jedoch nicht dafür ausgelegt, den Reifen an eine zweite Greifeinheit auf einer Ebene zu übergeben, die senkrecht zur Rotationsachse des Reifens ist.

Aufgabe der Erfindung ist daher, ein Greifsystem zum Beladen und Entladen eines Fahrzeugreifens bereitzustellen, das mit wenig Aufwand und variabel betrieben werden kann und eine geringe Zykluszeit aufweist. Weiterhin wird der benötigte Bauraum minimiert.

Dies Aufgabe wird durch ein Greifsystem nach Anspruch 1 gelöst. Die Unteransprüche geben bevorzugte Weiterbildung an.

Demnach ist ein Greifsystem zum Beladen und Entladen eines Fahrzeugreifens vorgesehen, das mindestens zwei Greifeinheiten aufweist, eine erste Greifeinheit zum Beladen einer Reifenaufnahme in einem Messbereich des Greifsystems mit einem Fahrzeugreifen und einer zweiten Greifeinheit zum Entladen eines in der Reifenaufnahme in dem Messbereich befindlichen Fahrzeugreifens.

Erfindungsgemäß ist hierbei vorgesehen, dass jede Greifeinheit mehrere bewegliche Greifarme aufweist, die jeweils über einen, vorzugsweise endseitig am jeweiligen Greifarm angeordneten, Drehpunkt drehbar an einer verschiebbaren Halterung angeordnet sind, wobei an den Greifarmen, vorzugsweise endseitig und an den den Drehpunkten gegenüberliegenden Enden, an definierten Greifpunkten jeweils Anlagemittel angeordnet sind zum Anlegen an einen in einem Greifbereich der jeweiligen Greifeinheit angeordneten Fahrzeugreifen, wobei die Anlagemittel vorzugsweise an den Laufstreifen des Fahrzeugreifens angelegt werden können. Die Greifpunkte können dabei bei einer Verdrehung der Greifarme um ihre Drehpunkte je nach Drehrichtung auf einen festgelegten Zentrierpunkt zu oder von diesem wegbewegt werden, so dass die Anlagemittel der jeweiligen Greifeinheit bei einer Verdrehung der Greifarme auf den Zentrierpunkt zu an einen in dem jeweiligen Greifbereich angeordneten Fahrzeugreifen, insbesondere an dessen Laufstreifen, angelegt werden können zum radialen Greifen und axialen Festlegen des Fahrzeugreifens durch die jeweilige Greifeinheit. Die Greifarme sind dabei derartig zueinander angeordnet und zueinander beweglich, dass ein durch die jeweilige Greifeinheit radial gegriffener Fahrzeugreifen unabhängig von seinem Durchmesser in einer von dem festgelegten Zentrierpunkt abhängigen Position im jeweiligen Greifbereich ausgerichtet werden kann. Die erste Greifeinheit ist ausgebildet, einen in einem Zuführbereich des Greifsystems radial gegriffenen und axial festgelegten Fahrzeugreifen in den Messbereich zu überführen zum Beladen der Messeinrichtung bzw. der Reifenaufnahme und die zweite Greifeinheit ist ausgebildet, einen in dem Messbereich radial gegriffenen und axial festgelegten Fahrzeugreifen in einen Abführbereich zu überführen zum Entladen der Messeinrichtung bzw. der Reifenaufnahme.

Vorteilhafterweise kann dadurch erreicht werden, dass der von den Greifeinheiten aufgenommene Fahrzeugreifen gleichzeitig relativ zum Zentrierpunkt ausgerichtet werden kann. Dadurch kann eine Vorzentrierung entfallen. Weiterhin kann das Greifsystem variabel verwendet werden, da die Ausrichtung des Fahrzeugreifens in Abhängigkeit des festgelegten Zentrierpunktes unabhängig von der Größe bzw. dem Durchmesser des Reifens erreicht werden kann. Weiterhin wird aufgrund der Verwendung mehrerer Greifarme ein sicheres Greifen des Fahrzeugreifens in radialer Richtung ermöglicht.

Erfindungsgemäß ist außerdem vorgesehen, dass die Greifeinheiten auf einem Verfahrgestell angeordnet sind, wobei das Verfahrgestell in eine Verfahrrichtung verfahrbar ist zum vorzugsweise linearen Verschieben der beiden Greifeinheiten zwischen den jeweiligen Bereichen. Dadurch kann in einfacher Weise, beispielsweise über ein Schienensystem, ein Überführen des Fahrzeugreifens zwischen den einzelnen Bereichen ermöglicht werden. Das Verfahrgestell ist vorzugsweise unabhängig von der Messeinrichtung im Messbereich betreibbar, so dass nach einem Beladen des Fahrzeugreifens in die Reifenaufnahme im Messbereich eine Messung unabhängig von einem darauffolgenden Verschieben des Verfahrgestells erfolgen kann.

Vorzugsweise ist weiterhin vorgesehen, dass jede Greifeinheit auf einem eigenen Verfahrgestell angeordnet ist zum voneinander unabhängigen, vorzugsweise linearen Verfahren der Greifeinheiten entlang einer vorgegebenen Verfahrrichtung. Damit können die Greifeinheiten vorteilhafterweise auch in unterschiedliche Verfahrrichtungen individuell verschoben werden, so dass ein variabler Aufbau gewährleistet werden kann. Dies kann beispielsweise dann vorteilhaft sein, wenn der Zuführbereich und der Abführbereich stark unterschiedlich ausgerichtet sind, beispielsweise rechtwinklig zueinander.

Gemäß einer bevorzugten Weiterbildung ist außerdem vorgesehen, dass die Greifeinheiten unabhängig voneinander um eine Schwenkachse verschwenkbar sind zum Aufnehmen eines Fahrzeugreifens aus dem Zuführbereich durch die erste Greifeinheit und zum Ablegen eines Fahrzeugreifens in den Abführbereich durch die zweite Greifeinheit. Dadurch wird vorteilhafterweise erreicht, dass die jeweilige Greifeinheit einen Fahrzeugreifen aus dem Zuführbereich aufnehmen bzw. im Abführbereich ablegen kann, auch wenn die den Fahrzeugreifen dort transportierenden Förderbänden bzw. Transportbänder anders ausgerichtet sind als in dem Greifsystem. Die jeweilige Greifeinheit kann also den Fahrzeugreifen selbst umpositionieren, so dass keine weiteren Komponenten dafür benötigt werden. Dadurch verringert sich insbesondere die Zykluszeit sowie der Bauraum und die verwendeten Komponenten.

Vorzugsweise ist dazu vorgesehen, dass die Schwenkachse parallel zur Verstellrichtung der Greifeinheiten liegt und ein Verschwenken der jeweiligen Greifeinheit von zwischen 45° und 90° ausgehend von einer aufrechten, in eine z-Richtung ausgerichteten Position ermöglich ist. Demnach kann die jeweiligen Greifeinheit auf ein Transportband verschwenkt werden, das herkömmlicherweise zwischen 45° und 90° gegenüber der aufrechten z-Richtung im Greifsystem angewinkelt ist. Damit kann das Greifsystem an ein herkömmliches Zuführsystem bzw. Abführsystem angeschlossen werden, so dass keine aufwendige Umrüstung nötig ist.

Vorzugsweise ist weiterhin vorgesehen, dass die jeweilige Greifeinheit durch einen elektrisch steuerbaren Schwenk-Aktor, beispielsweise einen Servomotor oder einen Pneumatikzylinder, um die Schwenkachse schwenkbar ist. Dadurch kann der Schwenkprozess weitestgehend automatisiert werden und das Schwenken selbst schnell durchgeführt werden, wodurch die Zykluszeiten weiter minimiert werden.

Vorzugsweise ist weiterhin vorgesehen, dass jede Greifeinheit eine gerade Anzahl von mindestens vier Greifarmen aufweist, wobei die Greifarme derartig an der jeweiligen Halterung angeordnet sind, dass eine Zentrierung des ergriffenen Fahrzeugreifens erreicht werden kann. Durch eine gerade Anzahl an Greifarmen kann der Fahrzeugreifen gleichmäßig gegriffen werden, wodurch ein Abrutschen des Fahrzeugreifens aus einer gegriffenen Position vermieden werden kann. Die axiale Lage und die Ausrichtung relativ zum Zentrierpunkt kann also mit hoher Genauigkeit gesichert werden, so dass ein exaktes Beladen und Entladen der Reifenaufnahme im Messbereich erreicht werden kann.

Vorzugsweise ist dabei vorgesehen, dass die Drehpunkte der mindestens vier Greifarme auf einem festgelegten Drehpunkt-Kreis angeordnet sind und die mindestens vier Greifarme zumindest paarweise, d.h. die inneren Greifarme und die äußeren Greifarme jeweils unter sich, vorzugsweise jedoch alle Greifarme, identische Armlängen aufweisen, wobei die Armlängen den Abstand zwischen den Drehpunkten und den Greifpunkten des jeweiligen Greifarmes angeben. Dadurch kann erreicht werden, dass sich bei einer aufeinander abgestimmten bzw. synchronisierten Bewegung der Greifarme ein gleichmäßiges radiales Greifen ermöglicht wird, bei dem der Fahrzeugreifen unabhängig von seiner Größe immer auf einer festgelegten Position relativ zum Zentrierpunkt gehalten wird. Die Ausrichtung ist dadurch sehr einfach in reproduzierbarer Weise umzusetzen. Vorzugsweise ist die Bewegung der Greifarme innerhalb einer Greifeinheit derartig synchronisiert, dass die Greifpunkte für jede beliebige Verdrehung um die Drehpunkte auf einem Greifpunkt-Kreis liegen. Vorzugsweise ist dabei vorgesehen, dass der Greifpunkt-Kreis konzentrisch zum Drehpunkt-Kreis verläuft. Demnach ist in bevorzugter Weise vorgesehen, dass die Greifarme einer Greifeinheit derartig verdreht werden können, dass sich der Greifpunkt-Kreis
- an einen Außendurchmesser des zu greifenden Fahrzeugreifens annähert zum radialen Greifen eines im jeweiligen Greifbereich angeordneten Fahrzeugreifens, oder
- von einem Außendurchmesser eines bereits gegriffenen Fahrzeugreifens entfernt zum Loslassen des bereits gegriffenen Fahrzeugreifens.

Damit lässt sich der Fahrzeugreifen in reproduzierbarer und exakter Weise gezielt und entsprechend ausgerichtet greifen und wieder loslassen. Bevorzugt ist dabei, dass ein Mittelpunkt des Greifpunkt-Kreises auf dem Zentrierpunkt liegt und die Greifpunkte damit immer denselben Abstand zum Zentrierpunkt aufweisen. Dadurch kann der gegriffene Fahrzeugreifens in der jeweiligen Greifeinheit automatisch in einfacher Weise exakt zentriert werden. Dadurch kann in einfacher Weise eine festgelegte Positionierung eingehalten werden, die für eine exakte Vermessung in der Messeinrichtung notwendig ist, so dass die anschließende Messung genauer wird.

Vorzugsweise ist außerdem vorgesehen, dass zumindest einer der Greifarme über eine Betätigungsstange mit einem Greif-Aktor zusammenwirkt, beispielsweise durch Betätigen einer mit dem Drehpunkt des jeweiligen Greifarmes fest verbundenen Greifschwinge, zum Initiieren einer Drehbewegung des zumindest einen Dreharmes, wobei die Bewegung der Greifarme über Zahnräder und/oder andere Übertragungsmittel, beispielsweise Flachriemen oder Zahnriemen, aneinander gekoppelt ist, um eine synchronisierte Bewegung der Greifarme zu erreichen. Damit kann in einfacher Weise über lediglich einen Aktor ein Ergreifen oder Loslassen eines Fahrzeugreifens erreicht werden, wobei die Bewegung gleichzeitig aufeinander abgestimmt ist, um die Greifpunkte auf dem Greifpunkt-Kreis zu halten und damit eine bestimmte Ausrichtung, insbesondere eine Zentrierung, des Fahrzeugreifens in der jeweiligen Greifeinheit zu erreichen.

Vorzugsweise ist weiterhin vorgesehen, dass die Greifarme in einem geöffneten Zustand der jeweiligen Greifeinheit lichte Öffnungen in die Verstellrichtung sowie in eine Zuführrichtung bei der ersten Greifeinheit bzw. in eine Abführrichtung bei der zweiten Greifeinheit ausbilden, wobei die lichten Öffnungen derartig festgelegt sind, dass ein Fahrzeugreifen entlang der Verstellrichtung sowie entlang der Zuführrichtung bzw. entlang der Abführrichtung in den jeweiligen Greifbereich oder aus dem jeweiligen Greifbereich gelangen kann, ohne die Greifarme zu berühren. Damit kann vorteilhafterweise erreicht werden, dass die Greifeinheiten während einer Messung bewegt werden können, ohne die Messung zu beeinflussen. Damit kann die Zykluszeit verringert werden, da während einer Messung der nächste Fahrzeugreifen bereits ergriffen und zum Beladen vorbereitet werden kann. Gleichzeitig kann beim Beladen eines neuen Fahrzeugreifens durch die erste Greifeinheit gleichzeitig bzw. bereits kurz davor ein Entladen des bereits vermessenen Fahrzeugreifens durch die zweite Greifeinheit erfolgen. Demnach können Greifprozesse im Greifsystem, insbesondere das Beladen und das Entladen in die Messeinrichtung, parallel durchgeführt werden, wodurch sich die Zykluszeit verringert.

Vorzugsweise ist weiterhin vorgesehen, dass die Anlagemittel als profilierte Rollen, insbesondere Stahlrollen, ausgeführt sind und der Fahrzeugreifen beim Anlegen der Greifarme an den Fahrzeugreifen formschlüssig von diesen gehalten werden können zum radialen Greifen und axialen Festlegen des Fahrzeugreifens, oder die Anlagemittel als gerändelte Stahlrollen ausgeführt sind und der Fahrzeugreifen beim Anlegen der Greifarme an den Fahrzeugreifen kraftschlüssig von diesen gehalten werden können zum radialen Greifen und axialen Festlegen des Fahrzeugreifens. Damit sind unterschiedliche Varianten des Ergreifens des Fahrzeugreifens möglich, wobei bei einem kraftschlüssigen, auf Reibung basierendem Greifen ein axiales Festlegen im Betrieb verbessert werden kann.

Die Erfindung wird im Folgenden anhand von Figuren näher erläutert. Es zeigen:
- Fig. 1: eine schematische Ansicht eines erfindungsgemäßen Greifsystems;
- Fig. 2a, b, c: Detailansichten einer Greifeinheit des Greifsystems gemäß Fig. 1 und
- Fig. 3a, b, c: das Greifsystem gemäß Fig. 1 in einer Seitenansicht in unterschiedlichen Betriebszuständen.

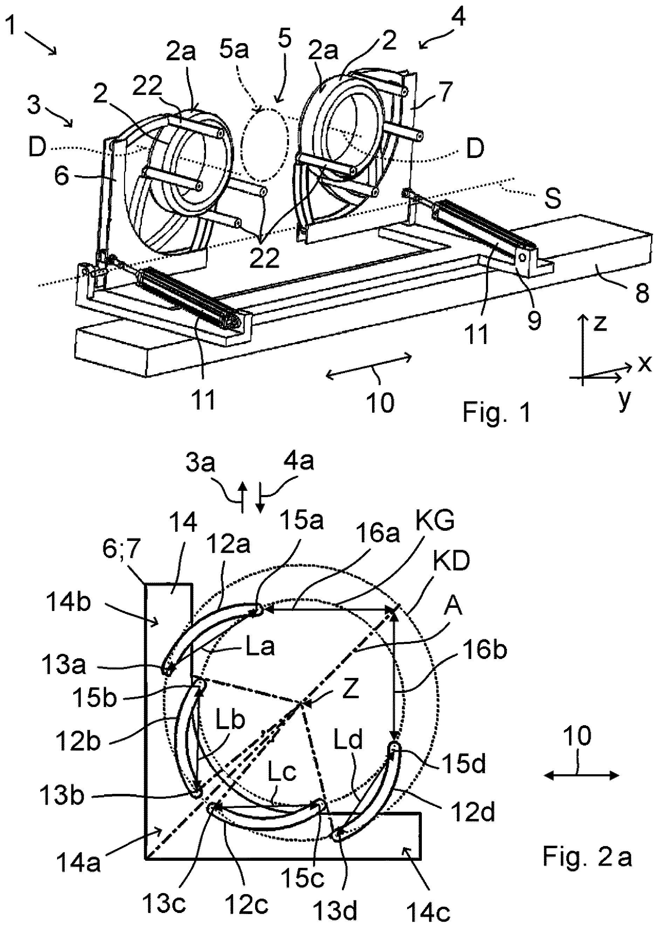

In Fig. 1 ist ein Greifsystem 1 (Greifshuttle) dargestellt, das ausgebildet ist, einen Fahrzeugreifen 2 aus einem Zuführbereich 3 in einen Abführbereich 4 zu überführen und beim Überführen zwischenzeitlich eine Reifenaufnahme 5a in einem Messbereich 5 zu Beladen und zu Entladen. Das Greifsystem 1 weist dazu zwei Greifeinheiten 6, 7 auf, wobei eine erste Greifeinheit 6 zum Beladen der Reifenaufnahme 5a mit einem aus dem Zuführbereich 3 aufgenommenen Fahrzeugreifens 2 und eine zweite Greifeinheit 7 zum Entladen eines in der Reifenaufnahme 5a befindlichen Fahrzeugreifens 2 und dem Ablegen dieses entladenen Fahrzeugreifens 2 in den Abführbereich 4 dient. Sowohl im Zuführbereich 3 als auch im Abführbereich 4 sind beispielsweise Transportbänder bzw. Förderbänder (nicht dargestellt) angeordnet, über die ein Fahrzeugreifen 2 zum Greifsystem 1 befördert bzw. von diesem abgeführt werden kann. Ein Fahrzeugreifen 2 im Zuführbereich 3 kann beispielsweise durch einen Anschlag (nicht dargestellt) entsprechend positioniert werden, so dass der zugeführte Fahrzeugreifen 2 von der ersten Greifeinheit 6 zum Beladen aufgenommen werden kann.

Zum Bewegen eines Fahrzeugreifens 2 innerhalb des Greifsystems 1 weist dieses ein Grundgestell 8 auf, an dem ein Verfahrgestell 9 angeordnet ist, wobei das Verfahrgestell 9 verschiebbar, beispielsweise über ein Schienensystem, entlang einer Verfahrrichtung 10 verfahren werden kann. Gemäß der Ausführungsform in Fig. 1 sind beide Greifeinheiten 6, 7 an demselben Verfahrgestell 9 angeordnet und die Verfahrrichtung 10 ist entlang einer x-Achse eines kartesischen Koordinatensystems ausgerichtet. Dadurch können beide Greifeinheiten 6, 7 entlang einer gemeinsamen Verfahrrichtung 10 linear verfahren werden, wobei die erste Greifeinheit 6 zwischen dem Zuführbereich 3 und dem Messbereich 5 und die zweite Greifeinheit 7 gleichzeitig zwischen dem Messbereich 5 und dem Abführbereich 4 hin- und herbewegt werden können.

Grundsätzlich ist es jedoch auch möglich, dass jede Greifeinheit 6, 7 unabhängig auf dem Grundgestell 8 entlang einer der jeweilige Greifeinheit 6, 7 individuell zugeordneten beliebigen Verfahrrichtung verfahren werden kann, um einen Fahrzeugreifen 2 zwischen den jeweiligen Bereichen 3, 4, 5 zu bewegen.

Gemäß Fig. 1 ist eine Drehachse D des in dem Greifsystem 1 von den beiden Greifeinheiten 6, 7 aufgenommenen Fahrzeugreifens 2 parallel zu einer y-Achse des kartesischen Koordinatensystems ausgerichtet, sodass ein Fahrzeugreifen 2 in aufrechter Position in dem Greifsystem 1 zwischen den einzelnen Bereichen 3, 4, 5 transportiert wird. Über den Zuführbereich 3 und den Abführbereich 4 werden die Fahrzeugreifen 2 jedoch vorzugsweise liegend über die jeweiligen Förderbänder transportiert, sodass die Drehachse D des Fahrzeugreifens 2 im Zuführbereich 3 bzw. im Abführbereich 4 gegenüber der y-Achse verkippt ist. Je nach Anordnung der Förderbänder im Zuführbereich 3 bzw. im Abführbereich 4 sind die Drehachsen D dabei parallel zu einer z-Achse des kartesischen Koordinatensystems oder aber in einem Winkel von beispielsweise 45° zur z-Achse ausgerichtet, wenn der Fahrzeugreifen 2 beispielsweise über ein durch Schwerkraft betriebenes Förderband transportiert wird.

Um einen zugeführten Fahrzeugreifen 2 durch die erste Greifeinheit 6 aufnehmen bzw. den entladenen Fahrzeugreifen 2 durch die zweite Greifeinheit 7 ablegen zu können, werden die Greifeinheiten 6, 7 um eine gemeinsame Schwenkachse S verschwenkt. Je nach Ausrichtung und Position der Transportbänder im Zuführbereich 3 bzw. im Abführbereich 4 kann jede Greifeinheit 6, 7 jedoch auch eine eigene Schwenkachse S besitzen. Das Verschwenken um die Schwenkachse S erfolgt durch einen Schwenk-Aktor 11, wobei jeder Greifeinheit 6, 7 ein eigener Schwenk-Aktor 11 zugeordnet ist, vorzugsweise mit identischem Aufbau. Darüber können die einzelnen Greifeinheiten 6, 7 zum Aufnehmen und Ablegen unabhängig voneinander um die Schwenkachse S verschwenkt werden. Der Schwenk-Aktor 11 kann beispielsweise als ein Servomotor mit einer Antriebsspindel oder als Pneumatikzylinder oder als ein vergleichbarer Aktor ausgeführt sein.

In Fig. 2a ist eine der Greifeinheiten 6, 7 in einer Detailansicht dargestellt, wobei sich die beiden Greifeinheiten 6, 7 des Greifsystems 1 lediglich durch ihr Ausrichtung relativ zum Messbereich 5 unterscheiden und sonst identisch aufgebaut sind. Jede der Greifeinheiten 6, 7 weist vier bogenförmige Greifarme 12a - 12d, zwei innere Greifarme 12b, 12c und zwei äußere Greifarme 12a, 12d, auf, die mit einem Ende jeweils an einer L-förmigen Halterung 14 angelenkt sind und sich dadurch um einen festen Drehpunkt 13a - 13d verdrehen können. An dem jeweils gegenüberliegenden Ende weisen die Greifarme 12a- 12d jeweils einen Greifpunkt 15a - 15d auf. Zwischen dem Drehpunkt 13a-13d und dem Greifpunkt 15a-15d wird eine Armlänge La - Ld definiert.

Die Anordnung der Greifarme 12a - 12d bzw. der Drehpunkte 13a - 13d und der Greifpunkte 15a - 15d ist gemäß dieser Ausführungsform in etwa symmetrisch gewählt, wobei die inneren Drehpunkte 13b, 13c in einem inneren Schenkelbereich 14a der Halterung 14 und die jeweils äußeren Drehpunkte 13a, 13d in den äußeren Schenkelbereichen 14b, 14c der Halterung 14 angeordnet sind. Es kann aber auch eine asymmetrische Anordnung der vier Greifarme 12a - 12d an der Halterung 14 vorgesehen sein. Die inneren Drehpunkte 13b, 13c und die äußeren Drehpunkte 13a, 13d sind in dieser Ausführungsform jeweils symmetrisch bezüglich einer Symmetrieachse A der Halterung 14 angeordnet. Die Armlängen Lb, Lc der inneren Greifarme 12b, 12c sind identisch zu den Armlängen La, Ld der äußeren Greifarme 12a gewählt.

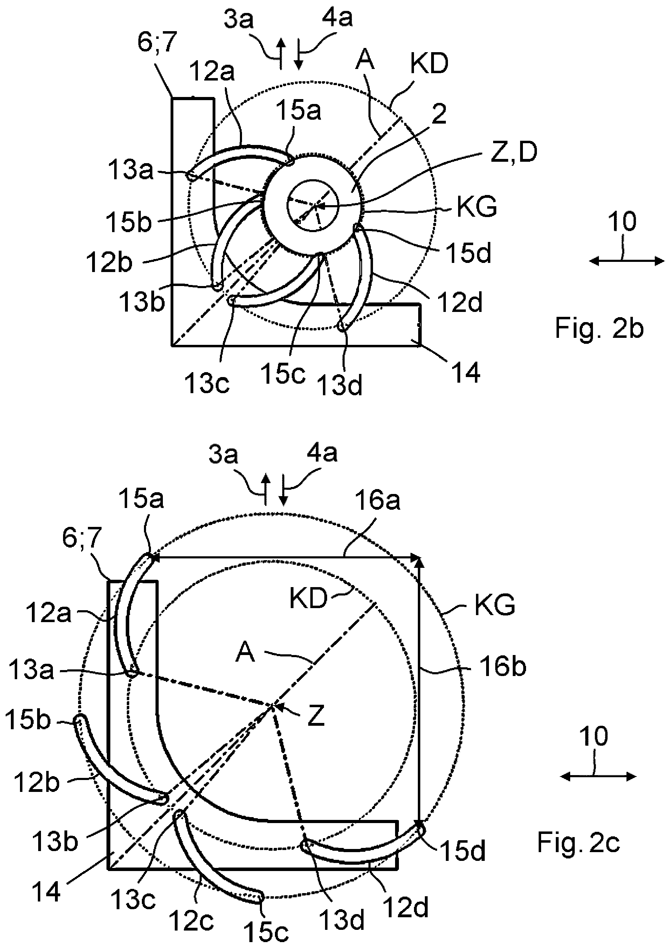

Dadurch liegen die Drehpunkte 13a - 13d auf einem Drehpunkt-Kreis KD und die Greifpunkte 15a - 15d bei in Fig. 2a dargestelltem Öffnungszustand der Greifarme 12a - 12d auf einem Greifpunkt-Kreis KG, wobei der Greifpunkt-Kreis KG konzentrisch zum Drehpunkt-Kreis KD angeordnet ist. Der gemeinsame Mittelpunkt der beiden Kreise KG, KD liegt auf der Symmetrieachse A sowie auf einem festgelegten Zentrierpunkt Z der jeweiligen Greifeinheit 6, 7. Der Drehpunkt-Kreis KD ist durch die an der Halterung 14 festgelegten Drehpunkte 13a - 13d unveränderbar. Aufgrund der Möglichkeit der Verdrehung der Greifarme 12a - 12d um die Drehpunkte 13a - 13d kann der Durchmesser des Greifpunkt-Kreises KG bei gleichbleibendem Mittelpunkt verändert werden, wobei dies abhängig vom Öffnungszustand der Greifarme 12a - 12d ist. Um die Greifpunkte 15a - 15d in jedem beliebigen Öffnungszustand auf dem Greifpunkt-Kreis KG zu halten, ist die Bewegung der Greifarme 12a - 12d synchronisiert. Bei einem synchronisierten Öffnen der Greifarme 12a - 12d (s. Fig. 2c) wird der Greifpunkt-Kreis KG also größer und bei einem synchronisierten Schließen der Greifarme 12a - 12d (s. Fig. 2b) entsprechend kleiner, wobei der Mittelpunkt fortlaufend gleichbleibt.

Dadurch wird eine Art Scherensystem ausgebildet, mit dem ein Fahrzeugreifen 2 radial, d.h. in Richtung des Mittelpunktes bzw. des Zentrierpunktes Z, gegriffen werden kann, wenn der Greifpunkt-Kreis KG durch eine synchronisierte Verstellung der Greifarme 12a - 12d an den Reifenumfang des zu greifenden Fahrzeugreifens 2 von außen angenähert wird, wie es in Fig. 2b dargestellt ist. Aufgrund des gleichbleibenden Mittelpunktes des Greifpunkt-Kreises KG liegt die Drehachse D des radial gegriffenen Fahrzeugreifens 2 unabhängig von dessen Durchmesser auf dem Zentrierpunkt Z. Dadurch kann ein radial gegriffener Fahrzeugreifen 2 unabhängig von seinem Durchmesser von der jeweiligen Greifeinheit 6, 7 automatisch zentriert werden.

Mit der ersten Greifeinheit 6, die einen über den Zuführbereich 3 zugeführten Fahrzeugreifen 2 aufnimmt, kann also vorteilhafterweise gleichzeitig eine Zentrierung des Fahrzeugreifens 2 gewährleistet werden, bevor dieser in die Reifenaufnahme 5a im Messbereich 5 überführt wird. Damit ist keine aufwendige Vorzentrierung des Fahrzeugreifens 2 nötig, die für eine zuverlässige Vermessung des Fahrzeugreifens 2 im Messbereich nötig ist. Es ist allenfalls dafür zu sorgen, dass der Fahrzeugreifen 2 im Zuführbereich 3 derartig positioniert ist, dass die um die Schwenkachse S verschwenkte erste Greifeinheit 6 den zugeführten Fahrzeugreifen 2 im geöffneten Zustand (s. Fig. 2c) ergreifen kann.

Im geöffneten Zustand sind die Greifarme 12a - 12d derartig um ihre Drehpunkte 13a - 13d verschwenkt, dass der Greifpunkt-Kreis KG größer ist als der Drehpunkt-Kreis KD. Die Greifarme 12a - 12d sind dabei mit ihren Greifpunkten 15a -15d so weit geöffnet, dass eine lichte Öffnung 16a in eine Zuführrichtung 3a bzw. in eine Abführrichtung 4a maximal wird und durch die Abmessungen des äußeren Schenkelbereichs 14b des Halters 14 bestimmt ist. Weiterhin ist eine lichte Öffnung 16b in Verfahrrichtung 10 ebenfalls maximal und durch die Abmessungen des äußeren Schenkelbereiches 14c des Halters 14 bestimmt. Die Greifpunkte 15a - 15d blockieren demnach eine Annäherung der jeweiligen Greifeinheit 6, 7 an den Fahrzeugreifen 2 in die Beladungsrichtung 3a (Zuführbereich 3) bzw. die Entladungsrichtung 4a (Abführbereich 4) sowie in die Verfahrrichtung 10 (Messbereich 5) nicht. Dadurch kann der Fahrzeugreifen 2 von der jeweiligen Greifeinheit 6, 7 in den jeweiligen Richtungen 3a, 4a, 10 ungehindert aufgenommen werden.

Um das radiale Greifen des Fahrzeugreifens 2 über die Greifpunkte 15a - 15d zu ermöglichen, sind an diesen gemäß Fig. 1 als Anlagemittel jeweils Anlagestangen 22 angeordnet, die sich entlang der y-Achse erstrecken. Die Anlagestangen 22 werden dabei durch das radiale Greifen an einen Laufstreifen 2 des Fahrzeugreifens 2 angedrückt, wobei sich die Anlagestange 22 vorzugsweise über die gesamte Breite des Laufstreifens 2a erstrecken, um ein sicheres Halten des Fahrzeugreifens 2 zu ermöglichen. Die Anlagestangen 22 sind dazu derartig entlang der y-Achse ausgedehnt, dass Fahrzeugreifen 2 mit unterschiedlichen Reifendimensionen bzw. unterschiedlichen Reifenbreiten ergriffen werden können.

Um den Fahrzeugreifen 2 sicher zu halten, sind die Anlagestangen 22 beispielsweise als profilierte Stahlrollen ausgebildet, die zumindest teilweise in das Profil des Laufstreifens 2a des Fahrzeugreifens 2 eingreifen können. Durch eine entsprechende Kraftausübung beim radialen Greifen wird der elastisch nachgiebige Fahrzeugreifen 2 leicht verformt und dadurch zwischen den Greifarmen 12a-12d formschlüssig eingeklemmt. Dies wird durch das scherenartige Zuspannen der Greifarme 12a-12d unterstützt.

Grundsätzlich ist es jedoch auch möglich, gerändelte Stahlrollen als Anlagestangen 22 zu verwenden. Der Fahrzeugreifen 2 wird dann nicht durch einen Formschluss, sondern durch einen Kraftschluss bzw. durch Reibung von den gerändelten Stahlrollen gehalten.

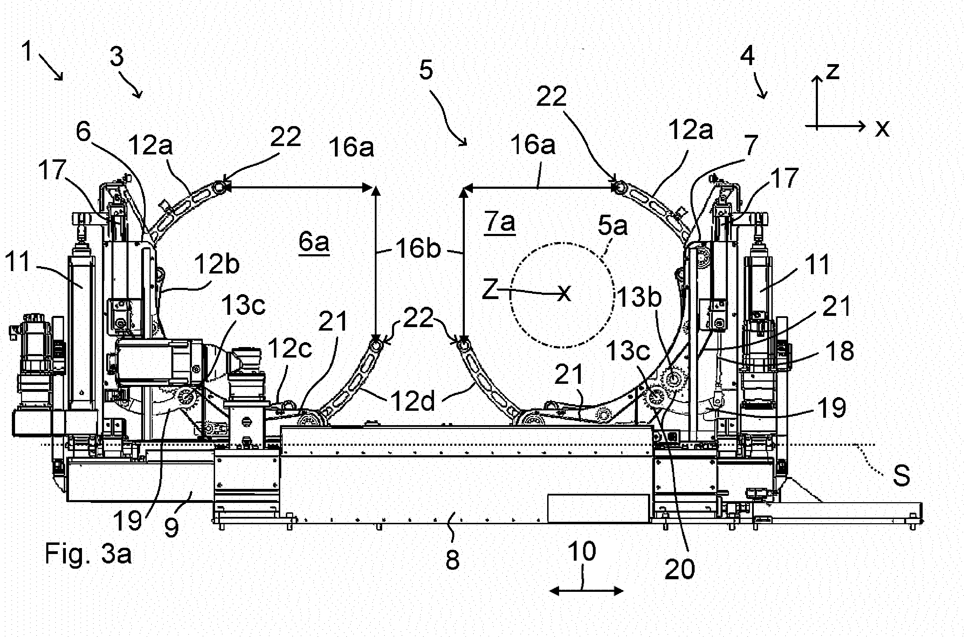

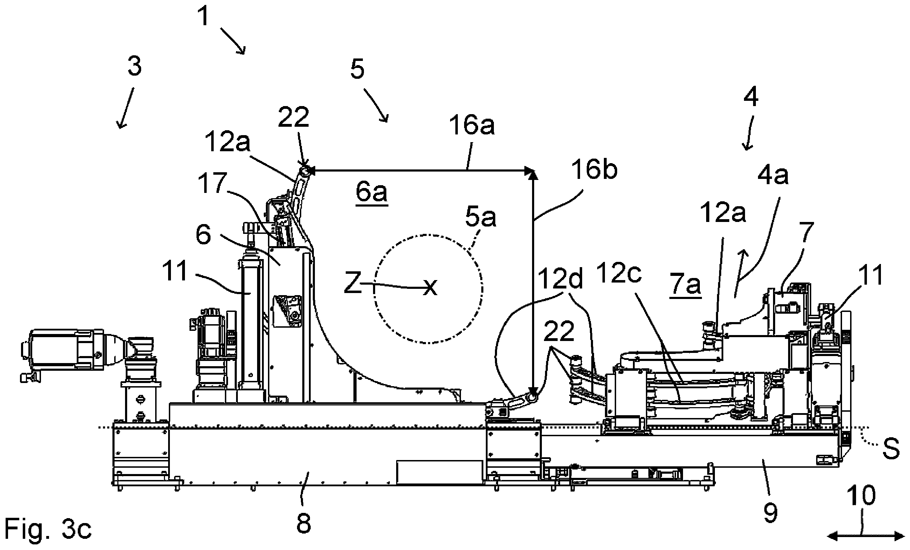

Anhand der Figuren 3a bis 3c kann der Bewegungsablauf des Greifsystems 1 nachvollzogen werden. Gemäß Fig. 3a befindet sich die erste Greifeinheit 6 in aufrechter Position. Die zweite Greifeinheit 7 befindet sich ebenfalls in aufrechter Position im Messbereich 5. Beide Greifeinheiten 6, 7 befinden sich in ihren geschlossenen Zuständen mit geringen lichten Öffnungen 16a, 16b. Die zweite Greifeinheit 7 kann in Fig. 3a beispielsweise gerade einen im Messbereich 5 befindlichen Fahrzeugreifen 2 ergreifen, während die erste Greifeinheit 6 beabsichtigt, einen neuen Fahrzeugreifen 2 aus dem Zuführbereich 3 aufzunehmen.

Gemäß Fig. 3a kann zunächst die gekoppelte Verstellung der Greifarme 12a -12d nachvollzogen werden. Demnach ist ein einzelner Greif-Aktor 17 mit einer linear verstellbaren Betätigungsstange 18 vorgesehen, die an einer Greifschwinge 19 drehbar gelagert ist. Die Greifschwinge 19 wiederum wirkt unmittelbar mit einem der Greifarme 12a- 12d, in Fig. 3a dem inneren Greifarm 12c, zusammen. Die inneren Greifarme 12b, 12c weisen an ihren Drehpunkten 13b, 13c jeweils Zahnräder 20 auf, die aneinander kämmen. Dadurch wird die Bewegung der beiden inneren Greifarme 12b, 12c synchronisiert. Die Greifschwinge 19 ist an einem der Zahnräder 20 befestigt, so dass die synchronisierte Bewegung durch den Greif-Aktor 17 über die Betätigungsstange 18 initiiert werden kann.

Weiterhin sind Übertragungsmittel 21, beispielsweise endlose Zahnriemen oder Zahnketten, vorgesehen, die jeweils auf einem der Zahnräder 20 der inneren Greifarme 12b, 12c und auf einem der Zahnräder 20 an den äußeren Drehpunkten 13a, 13d der äußeren Greifarme 12a, 12d aufgespannt sind. Dadurch kann eine Drehbewegung der inneren Greifarme 12b, 12c um ihre Drehpunkte 13b, 13c in eine lineare Bewegung des jeweiligen Übertragungsmittels 21 übersetzt werden. Anschließend wird die lineare Bewegung des jeweiligen Übertragungsmittels 21 wieder in eine Drehbewegung der äußeren Greifarme 12a, 12d um ihre Drehpunkte 13a, 13d übersetzt. Dadurch werden die Bewegungen der einzelnen Greifarme 12a - 12d gekoppelt und diese dadurch bei einer Ansteuerung des Greif-Aktors 17 synchronisiert bewegt.

Grundsätzlich ist es jedoch auch möglich, dass jeder Greifarm 12a - 12d einen eigenen Aktor aufweist, wobei dann dafür zu sorgen ist, dass die einzelnen Aktoren synchronisiert sind, um eine nahezu gekoppelte Bewegung der Greifarme 12a - 12d und damit eine Zentrierung des Fahrzeugreifens 1 im jeweiligen Greifarm 6, 7 bewirken zu können.

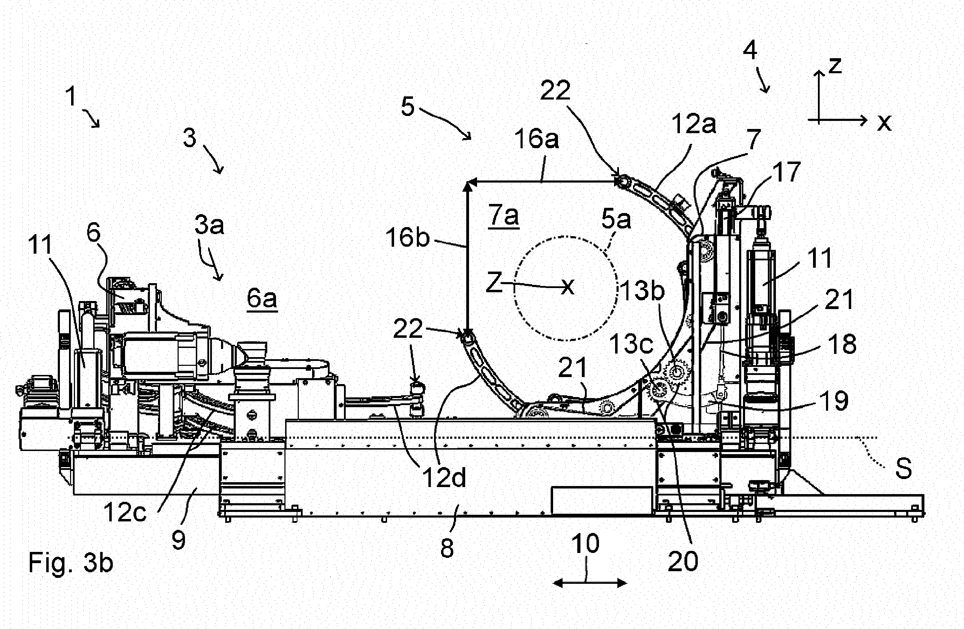

Die Aufnahme eines Fahrzeugreifens 2 aus dem Zuführbereich 3 erfolgt durch entsprechendes Verschwenken der ersten Greifeinheit 6 um die Schwenkachse S, wie beschrieben und wie in Fig. 3b dargestellt. Bevor der Fahrzeugreifen 2 der ersten Greifeinheit 6 in die Zuführrichtung 3a, beispielsweise durch ein Transportband im Zuführbereich 3, zugeführt werden kann, sind die Greifarme 12a-12d in den geöffneten Zustand zu überführen, so dass sich der Greifpunkt-Kreis KG entsprechend Fig. 2c vergrößert und die lichten Öffnungen 16a, 16b maximal werden. Das Öffnen kann beispielsweise gleichzeitig mit dem Verschwenken der ersten Greifeinheit 6 erfolgen.

Ist der Fahrzeugreifen 2 im Zuführbereich 3 in einem ersten Greifbereich 6a der ersten Greifeinheit 6 positioniert, kann dieser von den Greifpunkten 15a - 15d bzw. Greifstangen 17 der ersten Greifeinheit 6 radial ergriffen werden, indem der Zustand gemäß Fig. 2b eingestellt wird. Anschließend kann durch ein Verschwenken der ersten Greifeinheit 6 um die Schwenkachse S eine aufrechte Position des Fahrzeugreifens 2 im Greifsystem 1 erreicht werden, so dass sich wieder der Zustand gemäß Fig. 3a ergibt. Durch die Aufnahme des Fahrzeugreifens 2 über die Greifstangen 17 ist eine axiale Position des Fahrzeugreifens 2 in der ersten Greifeinheit 6 festgelegt. Durch die Zentrierung auf den Zentrierpunkt Z ist gleichzeitig auch die radiale Position des Fahrzeugreifens 2 in der ersten Greifeinheit 6 festgelegt.

Anschließend kann der von der ersten Greifeinheit 6 aufgenommene Fahrzeugreifen 2 durch eine lineare Verstellung des Verfahrgestells 9 entlang der gemeinsamen Verfahrrichtung 10 in den Messbereich 5 befördert werden. Der Zenrierpunkt Z der ersten Greifeinheit 6 ist hierbei derartig festgelegt, dass der aufgenommene Fahrzeugreifen 2 zentriert in den Messbereich 5 bzw. die Reifenaufnahme 5a einer nicht dargestellten Messeinrichtung übergeben und darin vermessen werden kann.

Nach Übergabe des Fahrzeugreifens 2 in den Messbereich 5, in dem der Fahrzeugreifen 2 von der Reifenaufnahme 5a übernommen wird, gehen die Greifarme 12a - 12d wieder in den geöffneten Zustand gemäß Fig. 2c bzw. 3b über. Dadurch wird insbesondere die lichte Öffnung 16b in Verfahrrichtung 10 derartig vergrößert, dass die erste Greifeinheit 6 über eine lineare Verstellung des Verfahrgestells 9 entlang der Verfahrrichtung 10 zurück zum Zuführbereich 3 verfahren werden kann, ohne den in dem Messbereich 5 befindlichen Fahrzeugreifen 2 mitzunehmen oder in seiner Lage zu beeinflussen. Dadurch kann während der Messung eines Fahrzeugreifens 2 gleichzeitig der nächste Fahrzeugreifen 2 aus dem Zuführbereich, wie beschrieben, von der ersten Greifeinheit 6 aufgenommen werden.

Gleichzeitig mit dem linearen Verstellen des Verfahrgestells 9 ist jedoch dafür zu sorgen, dass die zweite Greifeinheit 7 in den geöffneten Zustand gemäß Fig. 2c (gespiegelt) überführt wird. Dadurch ist die lichte Öffnung 16b in Verfahrrichtung 10 derartig vergrößert, dass die zweite Greifeinheit 7 bei linearer Verstellung in den Messbereich 5 verfahren werden kann, ohne den in dem Messbereich 5 befindlichen Fahrzeugreifen 2 mitzunehmen oder in seiner Lage zu beeinflussen.

Nach einer durchgeführten Vermessung des Fahrzeugreifens 2 im Messbereich 5 durch die Messeinrichtung kann die zweite Greifeinheit 7 den Fahrzeugreifen 2 radial ergreifen, indem der geschlossene Zustand gemäß Fig. 2b (gespiegelt) und Fig. 3a bzw. Fig. 3b eingestellt wird. Dadurch legen sich die Greifstangen 17 der zweiten Greifeinheit 7 an den Laufstreifen 2a des Fahrzeugreifens 2 an und ergreifen diesen vorzugsweise unter einer leichten Spannung. Nachdem die Messeinrichtung den Fahrzeugreifen 2 freigegeben hat, kann das Verfahrgestell 9 entlang der Verfahrrichtung 10 linear verstellt werden, so dass die zweite Greifeinheit 7 den radial ergriffenen Fahrzeugreifen 2 in den Abführbereich 4 transportieren und dieser durch ein Verschwenken um die Schwenkachse S auf ein Förderband im Abführbereich 4 abgelegt werden kann, wenn die Greifarme 12a - 12d wieder in den geöffneten Zustand gemäß Fig. 2b (gespiegelt) überführt werden. Die erste Greifeinheit 6 kann vor der linearen Verstellung in Richtung des Abführbereiches 4 bereits einen neuen Fahrzeugreifen 2 aus dem Zuführbereich 3 radial ergriffen haben, um diesen in axial und radial festgelegter Position zum Messbereich 5 zu überführen, während die zweite Greifeinheit 7 den vermessenen Fahrzeugreifen 2 gerade entlädt.

Damit können mit einem derartigen Greifsystem 1 mehrere Prozessschritte parallel und aufeinander abgestimmt durchgeführt werden, wodurch sich die Zykluszeit verringert. Demnach kann in dem in Fig. 3b gezeigten Zustand von der zweiten Greifeinheit 7 der im Messbereich 5 angeordnete Fahrzeugreifen 2 nach einem Messvorgang ergriffen werden, während die verschwenkte erste Greifeinheit 6 in dem Zuführbereich 3 einen neuen Fahrzeugreifen 2 für eine Messung aufnimmt. Dadurch kann ein bereits vermessener Fahrzeugreifen 2 durch die erste Greifeinheit 6 entladen werden und gleichzeitig bzw. kurzzeitig darauffolgend durch die zweite Greifeinheit 7 ein neuer Fahrzeugreifen 2 in den Messbereich 5 überführt werden. Gleichzeitig mit dem Beladen durch die erste Greifeinheit 6 bzw. kurzzeitig darauffolgend kann die zweite Greifeinheit 7 den bereits vermessenen Fahrzeugreifen 2 in den Abführbereich 4 übergeben. In dieser Weise können sukzessive Fahrzeugreifen 2 aus dem Zuführbereich 3 aufgenommen, in den Messbereich 5 beladen (erste Greifeinheit 6), aus dem Messbereich 5 entladen (zweite Greifeinheit 7) und in den Abführbereich 4 abgelegt werden.

Dabei sind die Zustände der einzelnen Greifeinheiten 6, 7 genau aufeinander abzustimmen, so dass bei jedem Verfahrvorgang des gemeinsamen Verfahrgestells 9 entlang der Verstellrichtung 10 sichergestellt wird, dass der im Messbereich 5 befindliche Fahrzeugreifen 2 durch die Einstellung der lichten Öffnung 16b in Verfahrrichtung 10 nicht beeinflusst wird.

### Bezugszeichenliste

### (Teil der Beschreibung)

- 1: Greifsystem
- 2: Fahrzeugreifen
- 2a: Laufstreifen des Fahrzeugreifens 2
- 3: Zuführbereich
- 3a: Zuführrichtung
- 4: Abführbereich
- 4a: Abführrichtung
- 5: Messbereich
- 5a: Reifenaufnahme
- 6: erste Greifeinheit (Beladen)
- 6a: erster Greifbereich
- 7: zweite Greifeinheit (Entladen)
- 7a: zweiter Greifbereich
- 8: Grundgestell
- 9: Verfahrgestell
- 10: Verfahrrichtung
- 11: Schwenk-Aktor
- 12a-12d: Greifarme
- 13a-13d: Drehpunkte der Greifarme 12a-12d
- 14: Halter
- 14a: innerer Schenkelbereich
- 14b, 14c: äußere Schenkelbereiche
- 15a-15d: Greifpunkte an den Greifarmen 12a-12d
- 16a: lichte Öffnung in Zuführrichtung 3a bzw. Abführrichtung 4a
- 16b: lichte Öffnung in Verfahrrichtung 10
- 17: Greif-Aktor
- 18: Betätigungsstange
- 19: Greifschwinge
- 20: Zahnrad
- 21: Übertragungsmittel
- 22: Anlagemittel/Anlagestange

- A: Symmetrieachse
- D: Drehachse des Reifens 2
- KD: Drehpunkt-Kreis
- KG: Greifarm-Kreis
- La - Ld: Länge der Greifarme 12a-12d
- S: Schwenkachse
- Z: Zentrierpunkt

## Patentansprüche

1. Greifsystem (1) zum Beladen und Entladen eines Fahrzeugreifens (2), mit mindestens zwei Greifeinheiten (6, 7), einer ersten Greifeinheit (6) zum Beladen einer Reifenaufnahme (5a) in einem Messbereich (5) des Greifsystems (1) mit einem Fahrzeugreifen (2) und einer zweiten Greifeinheit (7) zum Entladen eines in der Reifenaufnahme (5a) in dem Messbereich (5) befindlichen Fahrzeugreifens (2),
wobei jede Greifeinheit (6, 7) mehrere bewegliche Greifarme (12a-12d) aufweist, die jeweils über einen Drehpunkt (13a-13d) drehbar an einer verschiebbaren Halterung (14) angeordnet sind, wobei die Halterung (14) L-förmig ausgeführt ist und wobei an den Greifarmen (12a-12d) an definierten Greifpunkten (15a-15d) jeweils Anlagemittel (22) angeordnet sind zum Anlegen an einen in einem Greifbereich (6a, 7a) der jeweiligen Greifeinheit (6, 7) angeordneten Fahrzeugreifen (2),
wobei die Greifpunkte (15a-15d) bei einer Verdrehung der Greifarme (12a-12d) um ihre Drehpunkte (13a-13d) je nach Drehrichtung auf einen in dem Greifbereich (6a, 7a) festgelegten Zentrierpunkt (Z) zu oder von diesem weg bewegt werden können, so dass die Anlagemittel (22) der jeweiligen Greifeinheit (6, 7) bei einer Verdrehung der Greifarme (12a-12d) auf den Zentrierpunkt (Z) zu an einen in dem jeweiligen Greifbereich (6a, 7a) angeordneten Fahrzeugreifen (2) von außen angelegt werden können zum radialen Greifen und axialen Festlegen des Fahrzeugreifens (2) durch die jeweilige Greifeinheit (6, 7),
wobei die Greifarme (12a-12d) derartig zueinander angeordnet und zueinander beweglich sind, dass ein durch die jeweilige Greifeinheit (6, 7) radial gegriffener Fahrzeugreifen (2) unabhängig von seinem Durchmesser in einer von dem festgelegten Zentrierpunkt (Z) abhängigen Position im jeweiligen Greifbereich (6a, 7a) ausgerichtet werden kann, wobei die erste Greifeinheit (6) ausgebildet ist, einen in einem Zuführbereich (3) des Greifsystems (1) radial gegriffenen und axial festgelegten Fahrzeugreifen (2) in den Messbereich (5) zu überführen und die zweite Greifeinheit (7) ausgebildet ist, einen in dem Messbereich (5) radial gegriffenen und axial festgelegten Fahrzeugreifen (2) in einen Abführbereich (4) zu überführen, und
wobei die Greifeinheiten (6, 7) auf einem Verfahrgestell (9) angeordnet sind, wobei das Verfahrgestell (9) in eine Verfahrrichtung (10) entlang einer x-Achse verfahrbar ist, so dass beide Greifeinheiten (6, 7) entlang einer gemeinsamen Verfahrrichtung (10) entlang der x-Achse linear verfahrbar sind, wobei die erste Greifeinheit (6) zwischen einem Zuführbereich (3) und dem Messbereich (5) und die zweite Greifeinheit (7) gleichzeitig zwischen dem Messbereich (5) und dem Abführbereich (4) hin- und herbewegt werden können.

2. Greifsystem (1) nach Anspruch 1,
**dadurch gekennzeichnet, dass**
jede Greifeinheit (6, 7) auf einem eigenen Verfahrgestell (9) angeordnet ist zum voneinander unabhängigen Verfahren der Greifeinheiten (6, 7) entlang einer vorgegebenen Verfahrrichtung (10).

3. Greifsystem (1) nach einem der vorhergehenden Ansprüche,
**dadurch gekennzeichnet, dass**
die Greifeinheiten (6, 7) unabhängig voneinander um eine Schwenkachse (S) verschwenkbar sind zum Aufnehmen eines Fahrzeugreifens (2) aus dem Zuführbereich (3) durch die erste Greifeinheit (6) und zum Ablegen eines Fahrzeugreifens (2) in den Abführbereich (4) durch die zweite Greifeinheit (7).

4. Greifsystem (1) nach Anspruch 3,
**dadurch gekennzeichnet, dass**
die Schwenkachse (S) parallel zur Verstellrichtung (10) der Greifeinheiten (6, 7) liegt und ein Verschwenken der jeweiligen Greifeinheit (6, 7) von zwischen 45° und 90° ausgehend von einer aufrechten, in eine z-Richtung (z) ausgerichteten Position ermöglicht ist.

5. Greifsystem (1) nach Anspruch 3 oder 4,
**dadurch gekennzeichnet, dass**
die jeweilige Greifeinheit (6, 7) durch einen elektrisch steuerbaren Schwenk-Aktor (11), beispielsweise einen Servomotor oder einen Pneumatikzylinder, um die Schwenkachse (S) schwenkbar ist.

6. Greifsystem (1) nach einem der vorhergehenden Ansprüche,
**dadurch gekennzeichnet, dass**
jede Greifeinheit (6, 7) eine gerade Anzahl von mindestens vier Greifarmen (12a-12d) aufweist, wobei die Greifarme (12a-12d) derartig an der jeweiligen Halterung (14) angeordnet sind, dass eine Zentrierung des ergriffenen Fahrzeugreifens (2) ermöglicht ist.

7. Greifsystem (1) nach Anspruch 6,
**dadurch gekennzeichnet, dass**
die Drehpunkte (13a-13d) der Greifarme (12a-12d) auf einem festgelegten Drehpunkt-Kreis (KD) angeordnet sind und die Greifarme (12a-12d) zumindest paarweise, vorzugsweise alle Greifarme (12a - 12d), identische Armlängen (La-Ld) aufweisen, wobei die Armlängen (La-Ld) den Abstand zwischen den Drehpunkten (13a-13d) und den Greifpunkten (15a-15d) des jeweiligen Greifarmes (15a-15d) angeben.

8. Greifsystem (1) nach Anspruch 6 oder 7,
**dadurch gekennzeichnet, dass**
die Bewegung der Greifarme (12a-12d) innerhalb einer Greifeinheit (6, 7) synchronisiert ist.

9. Greifsystem (1) nach Anspruch 8,
**dadurch gekennzeichnet, dass**
die Bewegung der Greifarme (12a-12d) innerhalb einer Greifeinheit (6, 7) derartig synchronisiert ist, dass die Greifpunkte (15a-15d) für jede beliebige Verdrehung um die Drehpunkte (13a-13d) auf einem Greifpunkt-Kreis (KG) liegen.

10. Greifsystem (1) nach Anspruch 9,
**dadurch gekennzeichnet, dass**
die Greifarme (12a-12d) einer Greifeinheit (6, 7) derartig verdreht werden können, dass sich der Greifpunkt-Kreis (KG)
- an einen Außendurchmesser des zu greifenden Fahrzeugreifens (2) annähert zum radialen Greifen eines im jeweiligen Greifbereich (6a, 7a) angeordneten Fahrzeugreifens (2), oder
- von einem Außendurchmesser eines bereits gegriffenen Fahrzeugreifens (2) entfernt zum Loslassen des bereits gegriffenen Fahrzeugreifens (2).

11. Greifsystem (1) nach Anspruch 9 oder 10,
**dadurch gekennzeichnet, dass**
ein Mittelpunkt des Greifpunkt-Kreises (KG) auf dem Zentrierpunkt (Z) liegt zum Zentrieren des gegriffenen Fahrzeugreifens (2) in der jeweiligen Greifeinheit (6, 7), wobei der Greifpunkt-Kreis (KG) konzentrisch zum Drehpunkt-Kreis (KD) verläuft..

12. Greifsystem (1) nach einem der Ansprüche 8 bis 11,
**dadurch gekennzeichnet, dass**
zumindest einer der Greifarme (12a-12d) über eine Betätigungsstange (18) mit einem Greif-Aktor (17) zusammenwirkt zum Initiieren einer Drehbewegung des zumindest einen Dreharmes (12a-12d), wobei die Bewegung der Greifarme (12a-12d) über Zahnräder (20) und/oder andere Übertragungsmittel (21), beispielsweise Flachriemen oder Zahnriemen, aneinander gekoppelt ist, um eine synchronisierte Bewegung der Greifarme (12a-12d) zu erreichen.

13. Greifsystem (1) nach einem der vorhergehenden Ansprüche,
**dadurch gekennzeichnet, dass**
die Greifarme (12a-12d) in einem geöffneten Zustand der jeweiligen Greifeinheit (6, 7) lichte Öffnungen (16a, 16b) in die Verstellrichtung (10) sowie in eine Zuführrichtung (3a) bei der ersten Greifeinheit (6) bzw. in eine Abführrichtung (4a) bei der zweiten Greifeinheit (7) ausbilden, wobei die lichten Öffnungen (16a, 16b) derartig festgelegt sind, dass ein Fahrzeugreifen (2) entlang der Verstellrichtung (10) sowie entlang der Zuführrichtung (3a) bzw. entlang der Abführrichtung (4a) in den jeweiligen Greifbereich (6a, 7a) oder aus dem jeweiligen Greifbereich (6a, 7a) gelangen kann, ohne die Greifarme (12a-12d) zu berühren.

14. Greifsystem (1) nach einem der vorhergehenden Ansprüche,
**dadurch gekennzeichnet, dass**
die Anlagemittel (22) als profilierte Rollen, insbesondere Stahlrollen, ausgeführt sind und der Fahrzeugreifen (2) beim Anlegen der Greifarme (12a - 12d) an den Fahrzeugreifen (2) formschlüssig von diesen gehalten werden können zum radialen Greifen und axialen Festlegen des Fahrzeugreifens (2), oder
die Anlagemittel (22) als gerändelte Rollen, insbesondere Stahlrollen, ausgeführt sind und der Fahrzeugreifen (2) beim Anlegen der Greifarme (12a - 12d) an den Fahrzeugreifen (2) kraftschlüssig von diesen gehalten werden können zum radialen Greifen und axialen Festlegen des Fahrzeugreifens (2).

## Claims

1. Gripping system (1) for loading and unloading a vehicle tyre (2), with at least two gripping units (6, 7), a first gripping unit (6) for loading a tyre holder (5a) in a measuring region (5) of the gripping system (1) with a vehicle tyre (2) and a second gripping unit (7) for unloading a vehicle tyre (2) which is situated in the tyre holder (5a) in the measuring region (5), each gripping unit (6, 7) having a plurality of movable gripping arms (12a-12d) which are arranged in each case rotatably via a pivot point (13a-13d) on a displaceable mount (14), the mount (14) being of L-shaped configuration, and bearing means (22) for bearing against a vehicle tyre (2) which is arranged in a gripping region (6a, 7a) of the respective gripping unit (6,7) being arranged in each case on the gripping arms (12a-12d) at defined gripping points (15a-15d), it being possible for the gripping points (15a-15d) to be moved towards or away from a centring point (Z), defined in the gripping region (6a, 7a) in the case of a rotation of the gripping arms (12a-12d) about their pivot points (13a-13d) depending on the rotational direction, with the result that the bearing means (22) of the respective gripping unit (6, 7) can be applied from the outside towards the centring point (Z) onto a vehicle tyre (2) which is arranged in the respective gripping region (6a, 7a) in the case of a rotation of the gripping arms (12a-12d), in order to radially grip and axially fix the vehicle tyre (2) by way of the respective gripping unit (6, 7), the gripping arms (12a-12d) being arranged with respect to one another and being movable with respect to one another in such a way that a vehicle tyre (2) which is gripped radially by way of the respective gripping unit (6, 7) can be oriented, independently of its diameter, in a position in the respective gripping region (6a, 7a), which positioning is dependent on the fixed centring point (Z), the first gripping unit (6) being configured to transfer a vehicle tyre (2), radially gripped and axially fixed in a feed region (3) of the gripping system (1), into the measuring region (5), and the second gripping unit (7) being configured to transfer a vehicle tyre (2), radially gripped and axially fixed in the measuring region (5), into a discharge region (4), and the gripping units (6, 7) being arranged on a movement frame (9), it being possible for the movement frame (9) to be moved in the movement direction (10) along an x-axis, with the result that the two gripping units (6, 7) can be moved in a linear manner along a common movement direction (10) along the x-axis, it being possible for the first gripping unit (6) to be moved to and fro between a feed region (3) and the measuring region (5) and for the second gripping unit (7) to be moved to and fro at the same time between the measuring region (5) and the discharge region (4).

2. Gripping system (1) according to Claim 1, **characterized in that** each gripping unit (6, 7) is arranged on a dedicated movement frame (9) for the movement of the gripping units (6, 7) independently of one another along a predefined movement direction (10).

3. Gripping system (1) according to either of the preceding claims, **characterized in that** the gripping units (6, 7) can be pivoted independently of one another about a pivot axis (S) in order to receive a vehicle tyre (2) from the feed region (3) by way of the first gripping unit (6) and in order to deposit a vehicle tyre (2) into the discharge region (4) by way of the second gripping unit (7).

4. Gripping system (1) according to Claim 3, **characterized in that** the pivot axis (S) lies parallel to the adjusting direction (10) of the gripping units (6, 7), and pivoting of the respective gripping unit (6, 7) of between 45° and 90° is made possible, starting from an upright position which is oriented in a z-direction (z).

5. Gripping system (1) according to Claim 3 or 4, **characterized in that** the respective gripping unit (6, 7) can be pivoted about the pivot axis (S) by way of an electrically controllable pivoting actuator (11), for example a servomotor or pneumatic cylinder.

6. Gripping system (1) according to one of the preceding claims, **characterized in that** each gripping unit (6, 7) has an even number of at least four gripping arms (12a-12d), the gripping arms (12a-12d) being arranged on the respective mount (14) in such a way that centring of the gripped vehicle tyre (2) is made possible.

7. Gripping system (1) according to Claim 6, **characterized in that** the pivot points (13a-13d) of the gripping arms (12a-12d) are arranged on a fixed pivot point circle (KD), and the gripping arms (12a-12d) (at least in pairs, preferably all gripping arms (12a-12d)) have identical arm lengths (La-Ld), the arm lengths (La-Ld) specifying the spacing between the pivot points (13a-13d) and the gripping points (15a-15d) of the respective gripping arm (15a-15d).

8. Gripping system (1) according to Claim 6 or 7, **characterized in that** the movement of the gripping arms (12a-12d) within a gripping unit (6, 7) is synchronized.

9. Gripping system (1) according to Claim 8, **characterized in that** the movement of the gripping arms (12a-12d) within a gripping unit (6, 7) is synchronized in such a way that the gripping points (15a-15d) for any desired rotation about the pivot points (13a-13d) lie in a gripping point circle (KG).

10. Gripping system (1) according to Claim 9, **characterized in that** the gripping arms (12a-12d) of a gripping unit (6, 7) can be rotated in such a way that the gripping point circle (KG)
- approaches an external diameter of the vehicle tyre (2) to be gripped in order to radially grip a vehicle tyre (2) which is arranged in the respective gripping region (6a, 7a), or
- moves away from an external diameter of a vehicle tyre (2) which has already been gripped in order to release the vehicle tyre (2) which has already been gripped.

11. Gripping system (1) according to Claim 9 or 10, **characterized in that** a centre point of the gripping point circle (KG) lies on the centring point (Z) in order to centre the gripped vehicle tyre (2) in the respective gripping unit (6, 7), the gripping point circle (KG) running concentrically with respect to the pivot point circle (KD).

12. Gripping system (1) according to one of Claims 8 to 11, **characterized in that** at least one of the gripping arms (12a-12d) interacts by an actuating rod (18) with a gripping actuator (17) in order to initiate a rotational movement of the at least one rotational arm (12a-12d), the movement of the gripping arms (12a-12d) being coupled to one another via gearwheels (20) and/or other transmission means (21), for example flat belts or toothed belts, in order to achieve a synchronized movement of the gripping arms (12a-12d).

13. Gripping system (1) according to one of the preceding claims, **characterized in that**, in an open state of the respective gripping unit (6, 7), the gripping arms (12a-12d) configure clear openings (16a, 16b) in the adjusting direction (10) and in a feed direction (3a) in the case of the first gripping unit (6) and in the discharge direction (4a) in the case of the second gripping unit (7), the clear openings (16a, 16b) being fixed in such a way that a vehicle tyre (2) can pass along the adjusting direction (10) and along the feed direction (3a) and along the discharge direction (4a) into the respective gripping region (6a, 7a) or out of the respective gripping region (6a, 7a), without making contact with the gripping arms (12a-12d).

14. Gripping system (1) according to one of the preceding claims, **characterized in that** the bearing means (22) are configured as profiled rollers, in particular steel rollers, and, in the case of the gripping arms (12a-12d) bearing against the vehicle tyre (2), the vehicle tyre (2) can be held in a positively locking manner by these gripping arms (12a-12d) for radial gripping and axial fixing of the vehicle tyre (2), or the bearing means (22) are configured as knurled rollers, in particular steel rollers, and, in the case of the gripping arms (12a-12d) bearing against the vehicle tyre (2), the vehicle tyre (2) can be held in a non-positive manner by these gripping arms (12a-12d) for radial gripping and axial fixing of the vehicle tyre (2).

## Revendications

1. Système de préhension (1) pour le chargement et le déchargement d'un pneumatique de véhicule (2), comprenant au moins deux unités de préhension (6, 7), une première unité de préhension (6) pour le chargement d'un logement de pneumatique (5a) dans une zone de mesure (5) du système de préhension (1) avec un pneumatique de véhicule (2) et une deuxième unité de préhension (7) pour le déchargement d'un pneumatique de véhicule (2) se trouvant dans le logement de pneumatique (5a) dans la zone de mesure (5),
dans lequel chaque unité de préhension (6, 7) présente plusieurs bras de préhension mobiles (12a-12d) qui sont disposés sur un support coulissant (14) de manière à pouvoir tourner au niveau d'un point de rotation (13a-13d) respectivement, le support (14) étant réalisé en forme de L, et dans lequel sur les bras de préhension (12a-12d), à des points de préhension définis (15a-15d), des moyens d'application (22) sont disposés respectivement pour une application contre un pneumatique de véhicule (2) disposé dans une zone de préhension (6a, 7a) de l'unité de préhension (6, 7) respective,
dans lequel, en cas de rotation des bras de préhension (12a-12d) autour de leur points de rotation (13a-13d), les points de préhension (15a-15d) peuvent en fonction du sens de rotation être rapprochés ou éloignés d'un point de centrage fixe (Z) dans la zone de préhension (6a, 7a), de sorte que lors d'une rotation des bras de préhension (12a-12d) vers le point de centrage (Z), les moyens d'application (22) de l'unité de préhension (6, 7) respective peuvent être appliqués depuis l'extérieur contre un pneumatique de véhicule (2) disposé dans la zone de préhension (6a, 7a) respective pour la préhension radiale et la fixation axiale du pneumatique de véhicule (2) par l'unité de préhension (6, 7) respective,
dans lequel les bras de préhension (12a-12d) sont disposés les uns par rapport aux autres et sont mobiles les uns par rapport aux autres de telle sorte qu'un pneumatique de véhicule (2) saisi radialement par l'unité de préhension (6, 7) respective peut être aligné indépendamment de son diamètre dans une position dépendant du point de centrage fixe (Z) dans la zone de préhension (6a, 7a) respective, dans lequel la première unité de préhension (6) est réalisée pour transférer vers la zone de mesure (5) un pneumatique de véhicule (2) saisi radialement dans une zone d'alimentation (3) du système de préhension (1) et fixé axialement, et la deuxième unité de préhension (7) est réalisée pour transférer vers une zone d'évacuation (4) un pneumatique de véhicule (2) saisi radialement dans la zone de mesure (5) et fixé axialement, et
dans lequel les unités de préhension (6, 7) sont disposées sur un châssis de déplacement (9), le châssis de déplacement (9) pouvant se déplacer dans une direction de déplacement (10) le long d'un axe x de sorte que les deux unités de préhension (6, 7) peuvent être déplacées linéairement dans une direction de déplacement (10) le long de l'axe x, dans lequel la première unité de préhension (6) peut être déplacée en va-et-vient entre une zone d'alimentation (3) et la zone de mesure (5), et la deuxième unité de préhension (7) peut en même temps être déplacée en va-et-vient entre la zone de mesure (5) et la zone d'évacuation (4).

2. Système de préhension (1) selon la revendication 1, **caractérisé en ce que** chaque unité de préhension (6, 7) est disposée sur son propre châssis de déplacement (9) pour un déplacement indépendant des unités de préhension (6, 7) les unes des autres le long d'une direction de déplacement prédéfinie (10).

3. Système de préhension (1) selon l'une quelconque des revendications précédentes, **caractérisé en ce que** les unités de préhension (6, 7) sont pivotantes indépendamment les unes des autres autour d'un axe de pivotement (S) pour recevoir un pneumatique de véhicule (2) provenant de la zone d'alimentation (3) par la première unité de préhension (6) et pour déposer un pneumatique de véhicule (2) dans la zone d'évacuation (4) par la deuxième unité de préhension (7).

4. Système de préhension (1) selon la revendication 3, **caractérisé en ce que** l'axe de pivotement (S) est situé en parallèle à la direction de réglage (10) des unités de préhension (6, 7), et un pivotement de l'unité de préhension (6, 7) respective entre 45° et 90° est possible en partant d'une position redressée, alignée dans une direction z (z).

5. Système de préhension (1) selon la revendication 3 ou 4, **caractérisé en ce que** l'unité de préhension (6, 7) respective est être amenée à pivoter autour de l'axe de pivotement (S) par un actionneur de pivotement (11) à commande électrique, par exemple un servomoteur ou un vérin pneumatique.

6. Système de préhension (1) selon l'une quelconque des revendications précédentes, **caractérisé en ce que** chaque unité de préhension (6, 7) présente un nombre pair d'au moins quatre bras de préhension (12a-12d), les bras de préhension (12a-12d) étant disposés sur le support (14) respectif de telle sorte qu'un centrage du pneumatique de véhicule saisi (2) est possible.

7. Système de préhension (1) selon la revendication 6, **caractérisé en ce que** les points de rotation (13a-13d) des bras de préhension (12a-12d) sont disposés sur un cercle de points de rotation fixe (KD), et les bras de préhension (12a-12d) présentent au moins par paires, de préférence tous les bras de préhension (12a-12d), des longueurs de bras (La-Ld) identiques, dans lequel les longueurs de bras (La-Ld) indiquent la distance entre les points de rotation (13a-13d) et les points de préhension (15a-15d) du bras de préhension (15a-15d) respectif.

8. Système de préhension (1) selon la revendication 6 ou 7, **caractérisé en ce que** le mouvement des bras de préhension (12a-12d) à l'intérieur d'une unité de préhension (6, 7) est synchronisé.

9. Système de préhension (1) selon la revendication 8, **caractérisé en ce que** le mouvement des bras de préhension (12a-12d) à l'intérieur d'une unité de préhension (6, 7) est synchronisé de telle sorte que les points de préhension (15a-15d) pour chaque rotation quelconque autour des points de rotation (13a-13d) sont situés sur un cercle de points de préhension (KG).

10. Système de préhension (1) selon la revendication 9, **caractérisé en ce que** les bras de préhension (12a-12d) d'une unité de préhension (6, 7) peuvent subir une rotation de telle sorte que le cercle de points de préhension (KG)
- s'approche d'un diamètre extérieur du pneumatique de véhicule (2) à saisir pour la préhension radiale d'un pneumatique de véhicule (2) disposé dans la zone de préhension (6a, 7a) respective, ou
- s'éloigne d'un diamètre extérieur d'un pneumatique de véhicule (2) déjà saisi pour relâcher le pneumatique de véhicule (2) déjà saisi.

11. Système de préhension (1) selon la revendication 9 ou 10, **caractérisé en ce qu'**un centre du cercle de points de préhension (KG) est situé au point de centrage (Z) pour centrer le pneumatique de véhicule (2) saisi dans l'unité de préhension (6, 7) respective, le cercle de points de préhension (KG) s'étendant de manière concentrique par rapport au cercle de points de rotation (KD).

12. Système de préhension (1) selon l'une quelconque des revendications 8 à 11, **caractérisé en ce qu'**au moins l'un des bras de préhension (12a-12d) coopère par l'intermédiaire d'une barre d'actionnement (18) avec un actionneur de préhension (17) pour initier un mouvement rotatif du au moins un bras rotatif (12a-12d), dans lequel le mouvement des bras de préhension (12a-12d) est mutuellement couplé par l'intermédiaire de roues dentées (20) et/ou d'autres moyens de transmission (21), par exemple des courroies plates ou des courroies dentées, afin d'obtenir un mouvement synchronisé des bras de préhension (12a-12d).

13. Système de préhension (1) selon l'une quelconque des revendications précédentes, **caractérisé en ce que** dans un état ouvert de l'unité de préhension (6, 7) respective, les bras de préhension (12a-12d) réalisent des ouvertures libres (16a, 16b) dans la direction de réglage (10) ainsi que dans une direction d'alimentation (3a) sur la première unité de préhension (6) ou dans une direction d'évacuation (4a) sur la deuxième unité de préhension (7), dans lequel les ouvertures libres (16a, 16b) sont fixées de telle sorte qu'un pneumatique de véhicule (2) peut entrer la zone de préhension (6a, 7a) respective ou quitter la zone de préhension (6a, 7a) respective le long de la direction de réglage (10) ainsi que le long de la direction d'alimentation (3a) ou le long de la direction d'évacuation (4a) sans toucher les bras de préhension (12a-12d).

14. Système de préhension (1) selon l'une quelconque des revendications précédentes, **caractérisé en ce que** les moyens d'application (22) sont réalisés sous forme de rouleaux profilés, en particulier de rouleaux en acier, et lors de l'application des bras de préhension (12a-12d) au pneumatique de véhicule (2), le pneumatique de véhicule (2) peut être maintenu par ceux-ci par complémentarité de forme pour la préhension radiale et la fixation axiale du pneumatique de véhicule (2), ou les moyens d'application (22) sont réalisés sous forme de rouleaux moletés, en particulier de rouleaux d'acier, et lors de l'application des bras de préhension (12a-12d) au pneumatique de véhicule (2), le pneumatique de véhicule (2) peut être maintenu par ceux-ci par adhérence pour la préhension radiale et la fixation axiale du pneumatique de véhicule (2).
